# EUROPEAN PATENT SPECIFICATION

(11) **EP 0 412 987 B1**
(45) Date of publication and mention of the grant of the patent: **15.12.1993**
(21) Application number: 89905153.6
(22) Date of filing: 13.04.1989
(51) Int. Cl.: G01L 5/10

(54) **MEANS FOR DETERMINING FORCE APPLIED TO A ROLL BY STRIP MATERIAL**
VORRICHTUNG ZUR MESSUNG DER AUF EINE ROLLE WIRKENDEN KRÄFTE, DIE VON EINER ÜBER DER ROLLE LAUFENDEN BAHN HERRÜHREN
DISPOSITIF PERMETTANT DE DETERMINER LA FORCE APPLIQUEE SUR UN CYLINDRE PAR UN MATERIAU EN BANDE

(30) Priority: 22.04.1988 GB 8809607
(43) Date of publication of application: 20.02.1991
(73) Proprietor: DAVY McKEE (SHEFFIELD) LIMITED, Sheffield S9 4EX Yorkshire (GB)
(72) Inventor: HOPE, Thomas 37 St. Mary's Crescent Tickhill, Yorkshire (GB); LAWSON, Kenneth, Thomas 14 Cliffe Lane Hathersage, Yorkshire (GB); DOBSON, John, Clifford 65 Netherthorpe Way, Yorkshire S31 7FE (GB); SWIFT, Colin, Yorkshire S31 7NY (GB); SHERMAN, Paul 22 Lodge Hill Drive Kiveton Park, Yorkshire S31 8RU (GB)
(74) Representative: Kirk, Geoffrey Thomas
(86) International application number: GB8900378
(87) International publication number: WO8910544

(56) References cited:
- EP-A- 0 241 280
- WO-A-84/02121
- DE-A- 2 819 951
- DE-C- 2 754 532
- US-A- 3 413 846
- US-A- 3 499 306
- US-A- 4 127 027
- US-A- 4 300 403

## Description

This invention relates to a roll for determining the force or distribution of force applied to it by strip material moving in the direction of its length and engaging part of the periphery of the roll.

The strip material may be paper, plastics or metal and the roll may be used to determine the width, shape, or the force distribution of the strip material or the position of the strip on the roll.

It is well known that the shape of strip material can be determined by detecting the variations in tension across the width of the strip as the strip is moved, under tension, in the direction of its length. To this end, a "shapemeter" roll is positioned with its longitudinal axis normal to the direction of movement of the strip and part of its periphery is caused to engage with a face of the strip as the strip is moved under tension in the direction of its length. The roll is rotated as a result of its engagement with the moving strip and detectors are provided at positions along the length of the roll to detect the forces which are applied to the roll by the strip at these positions. These forces are representative of the tension in the strip at the corresponding positions across its width. From a consideration of the tension variation across the width of the strip, it is possible to determine the latent or residual stresses and hence the shape of the strip material.

It has been proposed in EP-A-0241280 for a shapemeter roll to comprise a plurality of annular rings fitted side-by-side around a rotatable arbor but separated therefrom by elastic material which permits displacement of the rings toward and away from the arbor. Means are provided for determining the displacement of each ring relative to the arbor.

It is known from WO84/02121 for a device for measuring variations in web tension to comprise a roller having a number of leaf elements of a thin film having piezo-electric properties to be disposed transversely along the peripheral surface of the roller. In response to the moving web being pressed against the elements, electric pulses are emitted from the elements and these are used to determine the variations in web tension across the web.

It is also known from DE-C-2 754 532 for a signalling device to include a body of piezo-electric material coupled to a resonant tuned circuit such that when pressure is applied to the body, a signal is radiated at a predetermined frequency. The device can be used to indicate the position of objects moving along a conveyor belt for example by applying the body of piezo-electric material as a surface coating for a rotatable roller forming part of the conveyor belt.

According to the present invention, a roll for determining the force applied to it by strip material moving in the direction of its length and engaging part of the peripheral surface of the roll comprises an elongate arbor; and an annular elastic structure mounted on the arbor and which provides the peripheral surface of the roll and permits displacement of the peripheral surface of the roll towards and away from the longitudinal axis of the arbor by the action of strip material engaging the peripheral surface of the roll; said structure including elastic compressible material and pressure-sensitive material which varies electrically in a predictable manner when subjected to compressive force; whereby the pressure-sensitive material is in the form of spaced apart bands and/or strips which cover substantially the entire peripheral surface of the arbor.

In use, the roll is arranged with its longitudinal axis at right angles to the direction of movement of the strip material. The roll is urged into engagement with one face of the strip material so that the strip material passes around part of the periphery of the roll. The periphery of the roll is provided by the annular elastic structure and the force applied to the structure is transmitted to the elastic compressible material which, in turn, applies the force to the pressure-sensitive material. Thus, by determining the electrical change of the pressure-sensitive material it is possible to determine the force which is applied to the roll by the strip material.

Furthermore, from a consideration of the variation in forces applied across the width of the strip, it is possible to determine the latent stresses in and hence the shape of the strip.

The pressure-sensitive material may be one of a range of piezo-resistive elastomers (PRE) or piezo-electric plastics (PEP). They form part of a formulated polymer system whose electrical resistance or voltage generated varies as they are subjected to load which gives rise to deformation. The resistance change of the PRE (and PEP) depends on many factors, not only the pressure applied to them, but the factors are such that the change of resistance is predictable.

A supplier of one such material is THE GATES RUBBER COMPANY LIMITED of Dumfries, Scotland.

Alternatively, the material may be a polymer film device sold under the trade mark FORCE SENSING RESISTOR and available from SERVO DATA COMPONENTS LIMITED of Newbury, Berkshire, England.

In order that the invention may be more readily understood, it will now be described, by way of example only, with reference to the accompanying drawings, in which:-
Figures 1, 3, 5, 7 and 9 are sectional side elevations of part of a roll in accordance with alternative embodiments of the invention; and
Figures 2, 4, 6, 8 and 10 are end elevations on the line X-X of Figures 1, 3, 5, 7 and 9, respectively.

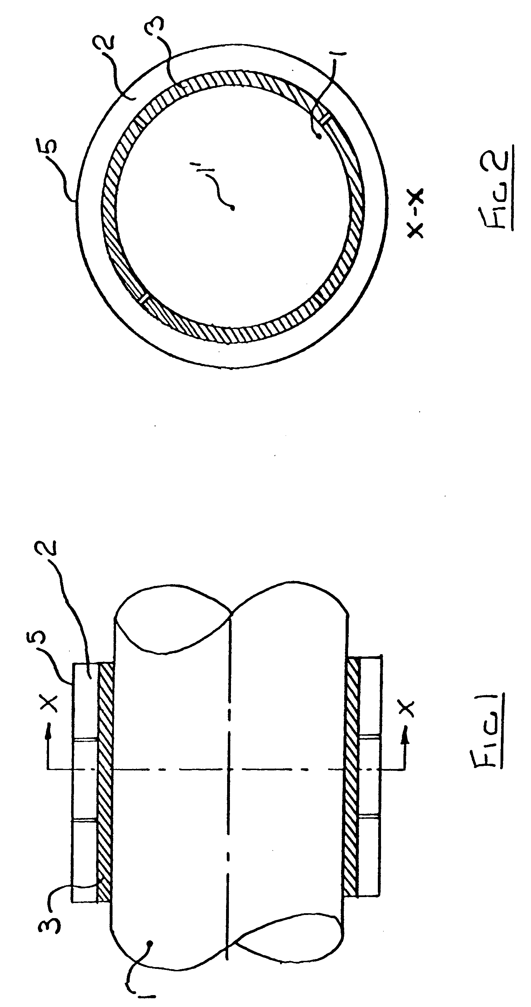

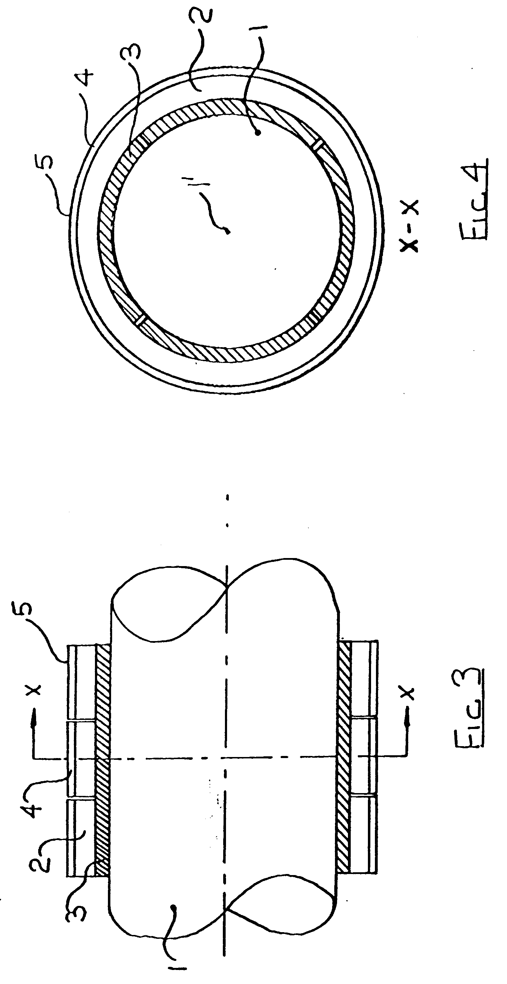

Referring to Figures 1 to 4, a rigid metal arbor 1 is mounted in bearings (not shown) which permit the arbor to rotate about its longitudinal axis 1'. On the periphery of the arbor, and extending parallel to the longitudinal axis thereof, there are a multiplicity of spaced apart strips of pressure sensitive elastically deformable material 3. The material is one which has an electrical resistance which varies in a predictable manner when subjected to compressive forces. Surrounding the strips 3 is a ring structure comprising a sleeve 2 of elastic deformable material, such as polyurethane, and this sleeve provides an outer cylindrical peripheral surface 5. The sleeve is divided into a plurality of separate portions, each of which is arranged circumferentially of the arbor.

In use, strip material moving in the direction of its length is caused to engage part of the peripheral surface 5 and this causes the roll to rotate about its longitudinal axis 1'. The strip applies forces to the sleeve 2 along the length of the roll and the forces have a component which compress the sleeve 2 and apply pressure to the pressure sensitive material 3. The changes in resistance of this material is an indication of the compressive force applied to the peripheral surface 5. The strips of material 3 are provided with electrodes (not shown) which enable the strips, which have the variable resistance, to be connected, for example, in series with a fixed resistor across a source of electrical energy. The variable resistor and the fixed resistor serve as a potential divider and an output can be taken which indicates the change of resistance of the material.

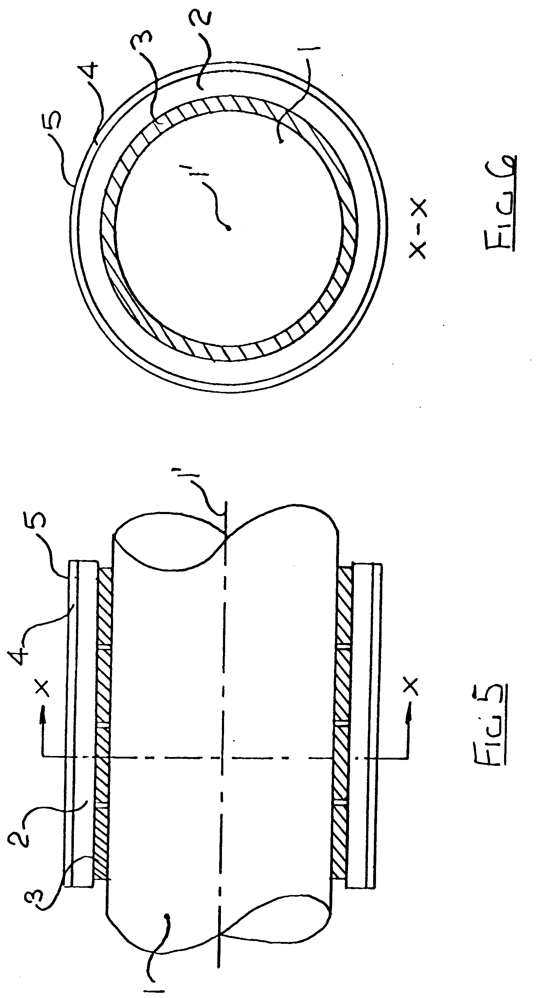

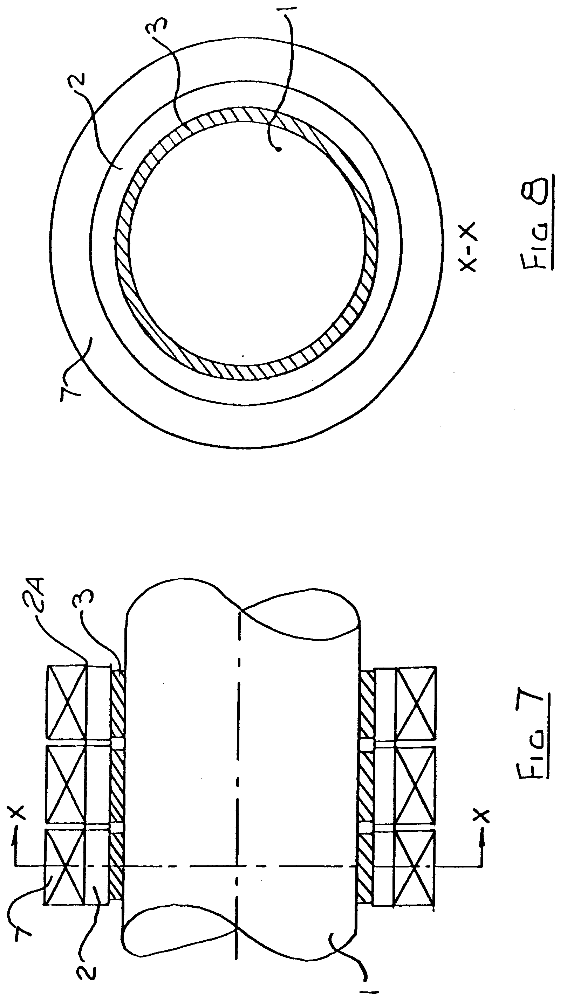

The arrangement shown in Figures 3 and 4 is particularly suitable for use when the strip material is likely to damage the elastic material 2 and, consequently, a protective sleeve 4 of a hard material, such as polyurethane or metal or a composite material of polyurethane and metal, is provided in order to protect the material 2 from damage. The peripheral surface of the roll which is engaged by the strip material is thus the outer surface of the protective material 4.

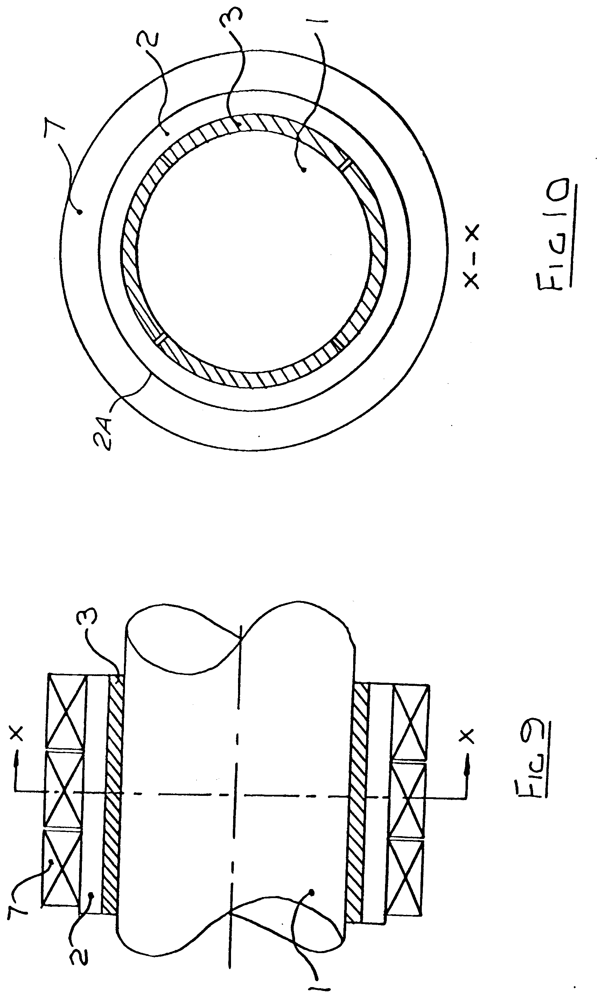

In the arrangement shown in Figures 5 and 6, the pressure sensitive material 3 is in the form of separate bands which extend circumferentially around the arbor 1. The bands are covered with a sheath 2 of resilient material, such as polyurethane, and, again, an outer protective sheath 4 is provided. Whether or not this outer sheath is provided depends on the material which will engage the roll and the protective sheath may be omitted if the material is unlikely to cause damage to the material 2.

The embodiments shown in Figures 7 and 8, and 9 and 10 are particularly suitable where the strip material is a metal, such as steel.

In Figures 7 and 8, the material 3, whose resistance changes with the compressive forces applied to it, is in the form of continuous bands extending circumferentially around the periphery of the arbor and each band has a separate sleeve 2 of polyurethane mounted around it.

In the arrangement shown in Figures 9 and 10, the material 3 is arranged in strips on the surface of the arbor extending in the direction of the length of the arbor and a sleeve 2 of material, such as polyurethane, surrounds the strips.

In the latter two embodiments, there are separate roller or ball bearings 7 between the outer surface 2A of the material 2 and the strip material that passes over the roll. The arbor 1, the pressure sensitive material 3, the elastic material 2 and the inner race of each roller or ball bearing do not rotate. They may, however, slowly oscillate to overcome creep effects of the material 3. The outer race of the roller or ball bearings rotate due to the motion of the strip. Downward loads due to tension in the strip will be transmitted through the bearings to exert a pressure on the material 3. As before, its electrical resistance change is determined.

In use, movement of the strip in the direction of its length causes the outer race of each bearing to rotate about its longitudinal axis and the strip applies forces to each outer race. The forces have a component which displace the race downwardly with respect to the arbor so that axis of the outer race is no longer coincident with that of the arbor. The forces applied to the outer races are a measure of the tension in that part of the strip which engages with each outer race and, consequently, the displacement of the races, measured by a change in the electrical resistivity of the material 3 as it is compressed, is an indication of the tension across the width of the strip.

In some of the ilustrated embodiments of the invention, the roll has been used as a shapemeter roll to determine the shape of the strip, usually metal strip, moving in the direction of its length. In some applications, however, it may not be necessary to determine the shape, but what is more important is to determine the total load or distribution of the load applied to the roll by the strip material or the distribution of the load along the length of the roll. This may be used in a calendering process for direct measurement of force or force distribution. If it is desired to know accurately the width of the strip that is passed over the roll, then, by determining the signals from the various strips of material 3, it is clear where the edges of the strip material engage with the outer periphery of the roll and, in this way, the width of the strip can be determined.

In all embodiments of the invention the material 3 can be of the form described above and sold by the named manufacturers. Electrodes (not shown) are provided to enable the material to be included in electrical circuits for determining the change of resistance as the pressure applied to the material is varied.

The or each body of pressure sensitive material 3 may be wound in a spiral on the surface of the arbor.

One or more bodies of pressure sensitive material positioned longitudinally of the arbor and one or more bodies of pressure sensitive material positioned circumferentially may be provided on the arbor. These bodies given an indication of the position on the roll of forces applied thereto.

## Claims

1. A roll for determining the force applied to it by strip material moving in the direction of its length and engaging part of the peripheral surface of the roll, said roll comprising an elongate arbor (1); and an annular elastic structure (2,3) mounted on the arbor and which provides the peripheral surface (5) of the roll and permits displacement of the peripheral surface (5) of the roll towards and away from the longitudinal axis of the arbor (1) by the action of strip material engaging the peripheral surface of the roll; said structure including elastic compressible material (2) and pressure-sensitive material (3) which varies electrically in a predictable manner when subjected to compressive force; characterised in that the pressure-sensitive material (3) is in the form of spaced apart bands and/or strips which cover substantially the entire peripheral surface of the arbor (1).

2. A roll as claimed in claim 1, characterised in that the pressure-sensitive material (3) comprises a plurality of spaced apart bands each extending around the peripheral surface of the arbor (1).

3. A roll as claimed in claim 1, characterised in that the pressure-sensitive material (3) comprises a plurality of separate strips on the peripheral surface of the arbor (1) and extending in the direction of the length of the arbor.

4. A roll as claimed in claim 1, characterised in that the pressure-sensitive material (3) comprises a plurality of separate strips wound spirally on the peripheral surface of the arbor (1).

5. A roll as claimed in claim 2, characterised in that the pressure-sensitive material (3) also comprises a plurality of separate strips extending in the direction of the length of the arbor (1).

6. A roll as claimed in any preceding claim, characterised in that the pressure-sensitive material (3) is a piezo-resistive elastomer or a piezo-electric plastic material.

7. A roll as claimed in any preceding claim characterised in that the elastic compressible material (2) comprises a plurality of sleeves arranged in side-by-side relation overlying the pressure-sensitive material (3).

8. A roll as claimed in claim 7, characterised in that each sleeve has an outer protective sheath (4) which provides the peripheral surface of part of the roll.

9. A roll as claimed in claim 1, characterised in that the elastic compressible material (2) is in the form of a sleeve having an outer protective sheath (4) which provides the peripheral surface (5) of the roll.

10. A roll as claimed in claim 8 or 9, characterised in that the or each protective sheath (4) is of polyurethane or metal or a combination of polyurethane and metal.

11. A roll as claimed in claim 7, characterised in that a ball or roller bearing (7) having inner and outer races is mounted on each sleeve and where the inner race of each bearing and the arbor are non-rotatable while the outer race is rotatable with respect to the inner race.

## Patentansprüche

1. Rolle zum Bestimmen der Kraft, die auf sie von Streifenmaterial ausgeübt wird, welches sich in seiner Längsrichtung bewegt und mit einem Teil der Umfangsoberfläche der Rolle im Eingriff steht, wobei die Rolle eine längliche Welle (1) und eine ringförmige elastische Struktur (2, 3) aufweist, die auf der Welle angebracht ist und die Umfangsoberfläche (5) der Rolle ergibt und ein Verschieben der Umfangsoberfläche (5) der Rolle zur Längsachse der Welle (1) und davon weg durch die Wirkung von Streifenmaterial ermöglicht, welches mit der Umfangsoberfläche der Rolle im Eingriff steht; wobei die Struktur ein elastisch kompressibles Material (2) und ein druckempfindliches Material (3) aufweist, welches sich unter der Einwirkung einer Kompressionskraft auf vorhersagbare Weise elektrisch verändert,
**dadurch gekennzeichnet,** daß
das druckempfindliche Material (3) in Form von beabstandeten Bändern und/oder Streifen vorliegt, welche im wesentlichen die gesamte Umfangsoberfläche der Welle (1) bedecken.

2. Rolle nach Anspruch 1, dadurch gekennzeichnet, daß das druckempfindliche Material (3) mehrere beabstandete Bänder aufweist, von denen sich jedes um die Umfangsoberfläche der Welle (1) erstreckt.

3. Rolle nach Anspruch 1, dadurch gekennzeichnet, daß das druckempfindliche Material (3) mehrere getrennte Streifen auf der Umfangsoberfläche der Welle (1) aufweist, die sich in Längsrichtung der Welle erstrecken.

4. Rolle nach Anspruch 1, dadurch gekennzeichnet, daß das druckempfindliche Material (3) mehrere getrennte Streifen aufweist, die spiralenförmig auf die Umfangsoberfläche der Welle (1) gewickelt sind.

5. Rolle nach Anspruch 2, dadurch gekennzeichnet, daß das druckempfindliche Material (3) auch mehrere getrennte Streifen aufweist, die sich in Längsrichtung der Welle (1) erstrecken.

6. Rolle nach einem der vorhergehenden Ansprüche, dadurch gekennzeichnet, daß das druckempfindliche Material (3) ein einen Piezowiderstand bildendes Elastomer oder ein piezoelektrisches Kunststoffmaterial ist.

7. Rolle nach einem der vorhergehenden Ansprüche, dadurch gekennzeichnet, daß das elastische kompressible Material (2) mehrere Muffen aufweist, die nebeneinander angeordnet über dem druckempfindlichen Material (3) liegen.

8. Rolle nach Anspruch 7, dadurch gekennzeichnet, daß jede Muffe eine äußere Schutzhülle (4) aufweist, die die Umfangsoberfläche des Teiles der Rolle ergibt.

9. Rolle nach Anspruch 1, dadurch gekennzeichnet, daß das elastische kompressible Material (2) in Form einer Muffe vorliegt, die eine äußere Schutzhülle (4) aufweist, die die Umfangsoberfläche (5) der Rolle ergibt.

10. Rolle nach Anspruch 8 oder 9, dadurch gekennzeichnet, daß die oder jede Schutzhülle (4) aus Polyurethan oder Metall oder aus einer Kombination aus Polyurethan und Metall besteht.

11. Rolle nach Anspruch 7, dadurch gekennzeichnet, daß auf jeder Muffe ein Kugellager oder Rollenlager (7) mit einem Innenring und einem Außenring angebracht ist, wobei der Innenring jedes Lagers und die Welle nicht drehbar sind, wogegen der Außenring gegenüber dem Innenring drehbar ist.

## Revendications

1. Cylindre destiné à déterminer la force qui lui est appliquée par un matériau en bande se déplaçant dans le sens de sa longueur et appliquant une partie de la surface périphérique du cylindre, ledit cylindre comportant un arbre allongé (1) ; et une structure élastique annulaire (2, 3) montée sur l'arbre et qui fournit la surface périphérique (5) du cylindre et permet le déplacement de la surface périphérique (5) du cylindre vers et à l'écart de l'axe longitudinal de l'arbre (1) grâce à l'action du matériau en bande s'appliquant sur la surface périphérique du cylindre; ladite structure comprenant un matériau compressible élastique (2) et un matériau sensible à la pression (3) qui varie électriquement d'une manière prévisible lorsqu'il est soumis à une force de compression : caractérisé en ce que le matériau sensible à la pression (3) se présente sous la forme de bandes espacées et/ou de bandes qui recouvrent sensiblement toute la surface périphérique de l'arbre (1).

2. Cylindre selon la revendication 1, caractérisé en ce que le matériau sensible à la pression (3) comporte plusieurs bandes espacées s'étendant chacune autour de la surface périphérique de l'arbre (1).

3. Cylindre selon la revendication 1, caractérisé en ce que le matériau sensible à la pression (3) comporte plusieurs bandes séparées sur la surface périphérique de l'arbre (1) et s'étendant dans le sens de la longueur de l'arbre.

4. Cylindre selon la revendication 1, caractérisé en ce que le matériau sensible à la pression (3) comporte plusieurs bandes séparées enroulées en spirale sur la surface périphérique de l'arbre (1).

5. Cylindre selon la revendication 2, caractérisé en ce que le matériau sensible à la pression (3) comporte également plusieurs bandes séparées s'étendant dans le sens de la longueur de l'arbre (1).

6. Cylindre selon l'une quelconque des revendications précédentes, caractérisé en ce que le matériau sensible à la pression (3) est un élastomère piézo-résistif ou une matière plastique piézo-électrique.

7. Cylindre selon l'une quelconque dès revendications précédentes, caractérisé en ce que le matériau élastique compressible (2) comporte plusieurs manchons disposés côte à côte en recouvrant le matériau sensible à la pression (3).

8. Cylindre selon la revendication 7, caractérisé en ce que chaque manchon possède une gaine extérieure protectrice (4) qui fournit la surface périphérique d'une partie du cylindre.

9. Cylindre selon la revendication 1, caractérisé en ce que le matériau élastique compressible (2) se présente sous la forme d'un manchon ayant une gaine extérieure protectrice (4) qui fournit la surface périphérique (5) du cylindre.

10. Cylindre selon la revendication 8 ou 9, caractérisé en ce que la ou chaque gaine protectrice (4) est en polyuréthane ou en métal ou une combinaison de polyuréthane et de métal.

11. Cylindre selon la revendication 7, caractérisé en ce que un roulement à billes ou à rouleaux (7) ayant des bagues intérieure et extérieure est monté sur chaque manchon et où la bague intérieure et l'arbre ne tournent pas alors que la bague extérieure peut tourner par rapport à la bague intérieure.
